Europäisches Patentamt

European Patent Office

Office européen des brevets

(19)

(11) Publication number: **0 140 551**
**B1**

(12) **EUROPEAN PATENT SPECIFICATION**

(45) Date of publication of patent specification: **15.07.87**

(51) Int. Cl.⁴: **G 02 B 7/00, G 02 B 7/18**

(21) Application number: **84306157.3**

(22) Date of filing: **10.09.84**

(54) Adjustment mechanism.

(30) Priority: **03.10.83 US 538583**

(43) Date of publication of application:
**08.05.85 Bulletin 85/19**

(45) Publication of the grant of the patent:
**15.07.87 Bulletin 87/29**

(84) Designated Contracting States:
**DE FR GB**

(56) References cited:
**US-A-4 210 385**
**US-A-4 392 140**
**US-A-4 396 919**

(73) Proprietor: **GENERAL MOTORS CORPORATION**
**General Motors Building 3044 West Grand Boulevard**
**Detroit Michigan 48202 (US)**

(72) Inventor: **Schweitzer, David Charles**
**5440 Thames Court**
**Santa Barbara California 93111 (US)**

(74) Representative: **Denton, Michael John et al**
**Patent Section - Luton Office (F6) Vauxhall Motors Limited P.O. Box 3 Kimpton Road Luton Bedfordshire LU2 0SY (GB)**

Courier Press, Leamington Spa, England.

## Description

This invention concerns a mechanism for providing adjustable movement of an optical or other device about a pair of substantially perpendicular axes.

More specifically, the mechanism according to the present invention is capable of reducing the profile of a sight head and eliminating the large and costly azimuth components normally employed with a gimbaled design (f. ex. US—A—4 392 140, according to the preamble of claim 1).

According to the present invention, a mechanism for supporting a device and providing adjustable movement thereof about a first axis and another axis substantially perpendicular thereto comprises a yoke having a pair of laterally spaced legs, and bearing means for supporting said device for pivotal movement about the said pivot axis, characterised in that said legs support a pair of swing arms for pivotal movement about a pair of axes inclined with reference to the pivot axis and said bearing means are mounted in each of said swing arms, and in that said mechanism includes connecting means interconnecting said swing arms to each other for providing synchronous movement of said swing arms in opposite directions about said inclined axes so as to rotate said device and provide adjustable movement thereof about the other axis substantially perpendicular to the pivot axis.

Preferably the inclined axes intersect at a point located substantially midway between said legs of said yoke.

The connecting means preferably comprises a pair of identical control members, one of said control members being rigidly connected to one of said swing arms and the other of said control members being rigidly connected to the other of said swing arms, and cable means interconnecting the control members of said swing arms to each other for providing synchronous movement of said swing arms in opposite directions about said inclined axes so as to rotate said device and provide adjustable movement thereof about the other of said pivot axes. Each of said control members is preferably formed with a pair of angularly spaced ears and said cable means includes a pair of cables which interconnect the corresponding ears of said control members to each other.

Preferably the mechanism includes a first actuator and a first position sensor carried by said legs for causing said device to pivot about one pivot axis and generate a signal representing the position of said device about said one pivot axis, and a second actuator and a second position sensor carried by said yoke, said second actuator being connected to one of said swing arms in one direction about its inclined axis so that said cable means causes the other of said swing arms to move in a direction opposite to said one direction and results in said device moving about said other pivot axis and said second position sensor generates a signal representing the position of said device about said other pivot axis. The first and second actuators preferably comprise electric motors, and the first and second position sensors preferably comprise an electromechanical device.

The said one pivot axis is preferably substantially horizontal, and said other pivot axis is substantially vertical.

The present invention sets out to provide a new and improved mechanism for adjustably positioning a device (eg a mirror) about a pair of substantially perpendicualr pivot axes in which the pivotal movement about one of the pivot axes is achieved through a twist axis arrangement; to provide, for example, a new and improved dual axis sight director mechanism utilizing a pair of cambered swing arms located in a pair of intersecting planes and movable in opposite directions for providing azimuth motion of a mirror supported by the swing arms; to provide a new and improved twist axis mechanism having a pair of cambered swing arms which are interconnected by a cable and pulley system or other mechanical or servo-controlled arrangement for synchronously moving the arms in opposite directions about a pair of inclined intersecting axes; and to provide a new and improved twist axis sight head having a mirror supported for movement about a horizontal axis by the lower ends of a pair of arms, the upper ends of which are supported by bearings for pivotal movement about a pair of inclined intersecting axes so when the arms are moved in opposite directions about the inclined axes, the mirror is moved about a substantially vertical axis.

The present invention is further illustrated, by way of example, with reference to the accompanying drawings, in which:

Figure 1 is a partially sectioned elevational view of a sight head employing a mechanism made in accordance with the present invention;

Figure 2 is a plan view of the sight head taken on lines 2—2 of Figure 1;

Figure 3 is a side elevational view of the sight head taken on line 3—3 of Figure 1;

Figure 4 is an enlarged view taken on line 4—4 of Figure 1 of one of the cambered swing arms incorporated in the sight head; and

Figure 5 is a fragmentary enlarged view taken on lines 5—5 of Figure 3 illustrating the cable connection between the drive pulley and one of the control members which forms a part of the present invention.

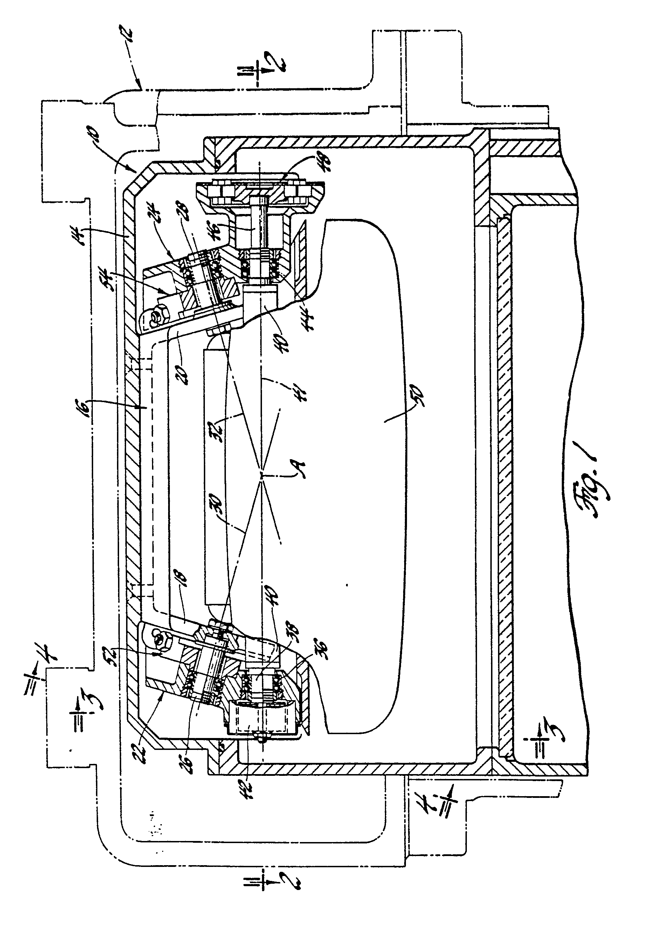

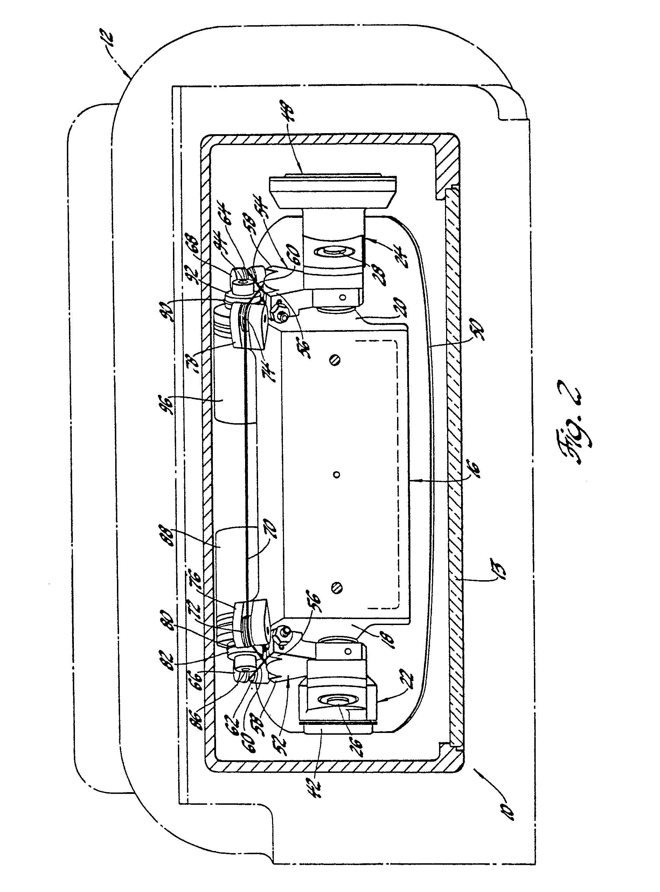

Referring now to the drawings and more particularly Figures 1 and 2 thereof, the mechanism according to the present invention is shown in the form of a sight head 10 located within the usual armor shield 12 having an armor cover which opens to expose a window 13 within a support housing 14. The mechanism includes the support housing 14 the top portion of which supports a yoke member 16 formed with a pair of depending legs 18 and 20 located in diverging planes which intersect above the shield 12. A pair of cambered swing arms 22 and 24 have their upper ends connected to the legs 18 and 20 by pivotal connections 26 and 28, respectively. The pivotal connections 26 and 28 allow the swing arms 22 and 24 to pivot about inclined axes 30 and 32, respectively, which intersect at a point A located substantially midway between the legs 18 and 20 as seen in Figure 1.

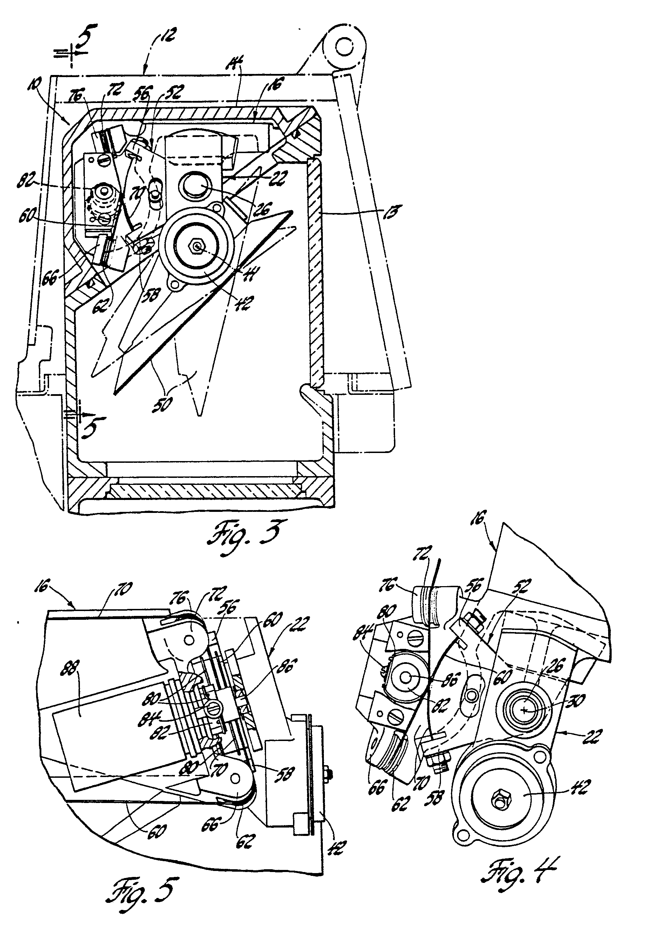

The lower end of the swing arm 22 carries a bearing assembly 36 which rotatably supports one end 38 of a horizontally oriented shaft 40, the longitudinal centre axis 41 of which passes through the point A. A permanent magnet DC servomotor 42 mounted in swing arm 22, is drivingly connected to the end 38 of the horizontally oriented shaft 40. The lower end of the swing arm 24 similarly carries a bearing assembly 44 which, in this case, supports the other end 46 of the shaft 40. A position sensor in the form of a resolver 48 is also carried by the lower end of the swing arm 24 and is connected to the other end 46 of shaft 40. An optical device in the form of a mirror 50 is rigidly secured to the shaft 40 and is adapted to be rotated by the servomotor 42 about the axis 41 between the positions shown in phantom lines in Figure 3 with its position about that axis being sensed by resolver 48.

As best seen in Figures 2, 3 and 4, the swing arms 22 and 24 are rigidly fastened to rearwardly extending and generally triangular shaped control members 52 and 54, respectively, each of which is formed with a pair of angularly spaced ears 56 and 58 located on a circle having the centre axis 30 or 32 of the associated pivotal connection, as the case may be, as its centre. The ear 56 of the control members 52 secured to swing arm 22 is fixed to one end of a cable 60 which is entrained about a pair of idler pulleys 62 and 64 rotatably supported by bracket members 66 and 68, respectively, rigidly formed on the yoke member 16. The other end of the cable 60 is fixed to the upper ear 56 of the control member 54 of the swing arm 24. A second cable 70 has one end fixed to the lower end 58 of the control member 52 of swing arm 22 and is entrained about idler pulleys 72 and 74 which are rotatably supported by bracket members 76 and 78, respectively, also rigidly formed on the yoke member 16. The other end of cable 70 is fixed to the ear 58 of the control member 54.

As seen in Figures 2, 4 and 5, a drive cable 80 is wound about and fixed to a drive pulley 82 by a screw 84 and has its opposite ends fixed to the ears 56 and 58 of the control member 52. As best seen in Figure 5, the drive pulley 82 is fixed to the output shaft 86 of a DC servomotor 88. A similar cable arrangement is provided adjacent the swing arm 24 which, in this case, consists of a driven cable 90 wound about and secured to a driven pulley 92 secured to the input shaft 94 of a resolver 96. The opposite ends of the driven cable 90 are connected to the ears 56 and 58 of the control member 54 in the same manner as described in connection with the drive cable 80 associated with the drive pulley 82.

The cable arrangement described above serves to pivot the swing arms 22 and 24 synchronously in opposite directions about the pivotal connections 26 and 28, so as to rotate the shaft 40 about a substantially vertical axis passing through point A and provide adjustment of the mirror 50 about such axis. In this regard, it will be noted that, as seen in Figure 4, when the motor 88 rotates the drive pulley 82 in a clockwise direction (when viewed in the direction of Figure 4), the ear 56 of the connected swing arm 22 is pivoted about the pivotal connection 26 in counterclockwise direction (also when viewed in the direction of Figure 4). The counterclockwise movement of the control member 52 acts through the cable 70 (which has its other end connected to the lower ear 58 of the control member 54) to cause the ear 58 of control member 54 to be raised about the pivotal connection 28 a distance equal to the distance that the ear 58 of the control member 52 is lowered, thereby causing swing arm 24 to pivot about the pivotal connection 28 in a clockwise direction (again when viewed in the direction of Figure 4). As a result, the lower end of the swing arm 24 pivots synchronously in the opposite direction to the lower end of swing arm 22 causing the rotation of the shaft 40 and the mirror 50 about the aforesaid vertical axis. Also, due to the interconnection of the control member 54 with the driven pulley 92 through the cable 90, the input shaft 94 of the resolver 96 is rotated the same amount as the drive pulley 82 and, as is conventional, generates a signal representing the position of the mirror 50 about the substantially vertical axis.

It, of course, should be apparent that if the drive pulley 82, as seen in Figure 4, is rotated by the motor 88 in a counterclockwise direction a predetermined distance, the cable 80 acts on the lower ear 58 of the control member 52 to raise the latter upwardly about the pivotal connection 26 causing the swing arm 22 to pivot clockwise about the axis 30. At the same time, and due to the cable 60, the ear 56 of the control member 54 is pulled downwardly causing the lower end the swing arm 24 to pivot forwardly about axis 32 a distance equal to the aforementioned predetermined distance.

Thus, from the above description, it will be understood that adjustable movement of the mirror 50 about the horizontal axis 41 is realized by energizing the motor 42 while movement of the mirror 50 about the substantially vertical axis passing through point A is attained by energizing the motor 88. In this manner, the mechanism 10 provides two axes of freedom in a very compact and mechanical simple package. In addition, it will be noted that the rotation of the shaft 40 about the substantially vertical axis is realized by having the opposite ends of the shaft 40 supported by bearing assemblies which provide compliance when the swing arms 22 and 24 are pivoted in opposite directions. Although such movement of the shaft 40 about a substantially vertical axis may be limited, the bearing assemblies 36 and 44 should provide sufficient compliance to allow useful shaft movement left and right in azimuth.

Broadly stated, the present mechanism consists of two cambered swing arms which contain and support an elevation axis of a device such as a mirror of a sight head. The arms are each supported by a small bearing set and are constrained by a pair of cables and appropriate pulleys to rotate synchronously in opposite directions relative to each other about a pair of inclined axes which may intersect at the elevation axis. The mechanism thus causes the mirror to rotate about an orthogonal axis which in this case is azimuth.

## Claims

1. A mechanism (10) for supporting a device (50) and providing adjustable movement thereof about a pivot axis (41) and another axis substantially perpendicular thereto, said mechanism including a yoke (16) having a pair of laterally spaced legs (18, 20), and bearing means (36, 44) for supporting said device (50) for pivotal movement about the said pivot axis (41), characterised in that said legs (18, 20) support a pair of swing arms (22, 24) for pivotal movement about a pair of axes (30, 32) inclined with reference to the pivot axis (41), and said bearing means (36, 44) are mounted in each of said swing arms (22, 24) and in that said mechanism includes converting means (60, 70, 88) interconnecting said swing arms (22, 24) to each other for providing synchronous movement of said swing arms (22, 24) in opposite directions about said inclined axes (30, 32) so as to rotate said device (50) and provide adjustable movement thereof about the other axis substantially perpendicular to the pivot axis (41).

2. A mechanism as claimed in claim 1, characterised in that the inclined axes (30, 32) intersect at a point (A) located substantially midway between said legs (18, 20) of said yoke (16).

3. A mechanism as claimed in claim 2, characterised in that the connecting means comprises a pair of identical control members (52, 54), one of said control means (52) being rigidly connected to one of said swing arms (22) and the other of said control member (54) being rigidly connected to the other of said swing arms (24), and cable (60, 70) interconnecting the control members (52, 54) of said swing arms (22,24) to each other for providing synchronous movement of said swing arms (22, 24) in opposite directions about said inclined axes (30, 32) so as to rotate said device (50) and provide ajustable movement thereof about the other axis substantially perpendicular to the pivot axis (41).

4. A mechanism as claimed in claim 3, characterised in that each of said control members (52, 54) is formed with a pair of angularly spaced ears (56, 58) and said cables (60, 70) interconnect the corresponding ears (56, 58) of said control members (52, 54) to each other.

5. A mechanism as claimed in claim 3 or claim 4, wherein said pivot axis (41) is substantially horizontal, and said other axis is substantially vertical, characterised in that said mechanism (10), includes a first actuator (42) and a first position sensor (48) carried by said legs (18, 20) for causing said device (50) to pivot about said horizontal axis and generate a signal representing the position of said device (50) about said horizontal axis, and a second actuator (88) and a second position sensor (96) carried by said yoke (16), said second actuator (88) being connected to one of said swing arms (22) for causing movement of said one of said swing arms in one direction about its inclined axis (30) so that said cables (60, 70) causes the other of said swing arms (24) to move in a direction opposite to said one direction and results in said device moving about said vertical axis and said second position sensor (96) generates a signal representing the position of said device about said vertical axis.

6. A mechanism as claimed in claim 5, characterised in that said first and second actuators (42, 88) in each instance is an electric motor and wherein said first and second position sensors (48, 96) in each instance is an electromechanical device.

## Patentansprüche

1. Mechanismus (10) zum Tragen einer Vorrichtung (50) und zur Schaffung einer einstellbaren Bewegung der Vorrichtung um eine Schwenkachse (41) und eine andere Achse, die im wesentlichen lotrecht dazu verläuft, wobei der Mechanismus ein Joch (16) mit einem Paar seitlich voneinander beabstandeter Schenkel (18, 20) und Lagerungseinrichtungen (36, 44) zur Aufnahme der Vorrichtung (50) zur schwenkbaren Bewegung um die Schwenkachse (41) aufweist, dadurch gekennzeichnet, daß die Schenkel (18, 20) ein Paar Schwenkarme (22, 24) zur schwenkbaren Bewegung um ein Paar Achsen (30, 32) abstützt, die bezüglich der Schwenkachse (41) geneigt sind, und die Lagerenrichtungen (36, 44) in jedem der Schwenkarme (22, 24) befestigt sind, und daß der Mechanismus Verbindungseinrichtungen (60, 70, 88) aufweist, die die Schwenkarme (22, 24) miteinander verbinden, um synchrone Bewegungen der Schwenkarme (22, 24) in entgegengesetzten Richtungen um die geneigten Achsen (30, 32) zu schaffen, um so die Vorrichtung (50) zu drehen und eine einstellbare Bewegung der Vorrichtung um die andere, in wesentlichen zu dre Schwenkachse (41) lotrechte Achse zu schaffen.

2. Mechanismus nach Anspruch 1, dadurch gekennzeichnet, daß sich die geneigten Achsen (30, 32) an einem Punkt (A) schneiden, der im wesentlichen in der Mitte zwischen den Schenkeln (18, 20) des Jochs (16) gelegen ist.

3. Mechanismus nach Anspruch 2, dadurch gekennzeichnet, daß die Verbindungseinrichtung ein Paar identischer Steuerglieder (52, 54) aufweist, von denen eines (52) fest mit einem der Schwenkarme (22) verbunden ist und das andere (54) fest mit dem anderen Schwenkarm (24) verbunden ist un Kabel (60, 70) die Steuerglieder (52, 54) der Schwenkarme (22, 24) miteinander verbinden, um synchrone Bewegungen der Schwenkarme (22, 24) in entgegengesetzte Richtungen um die geneigten Achsen (30, 32) zu schaffen und um so die Vorrichtung (50) zu drehen und eine einstellbare Bewegung der Vorrichtung (50) zu drehen und eine einstellbare Bewegung der Vorrichtung um die andere, zur Schwenkachse (41) im wesentlichen lotrechte Achse zu schaffen.

4. Mechanismus nach Anspruch 3, dadurch gekennzeichnet, daß jedes der Steuerglieder (52, 54) mit einem Paar im Winkel voneinander beabstandeter Ohren (56, 58) ausgebildet ist und die Kabel (60, 70) die zusammengehörenden Ohren (56, 58) der Steuerglieder (52, 54) miteinander verbinden.

5. Mechanismus nach Anspruch 3 oder 4, im dem die Schwenkachse (41) im wesentlichen horizontal verläuft und die andere Achse im wesentlichen vertikal verläuft, dadurch gekennzeichnet, daß der Mechanismus (10) einen ersten Betätiger (42) und einen ersen Stellungsgeber (48) aufweist, die durch die Schenkel (18, 20) getragen sind, um das Schwenken der Vorrichtung (50) um die horizontale Achse zu bewirken und ein die Stellung der Vorrichtung (50) um die horizontale Achse repräsentierendes Signal zu erzeugen, und einen zweiten Betätiger (88) une einen zweiten Stellunggeber (96) enthält, die durch das Joch (16) getragen sind, wobei der zweite Betätiger (88) mit einem der Schwenkarme (22) verbunden ist, um die Bewegung des einen Schwenkarms in eine Richtung um die geneigte Achse (30) zu bewirken, so daß die Kabel (60, 70) eine Bewegung des anderen Schwenkarms (24) in eine Richtung entgegengesetzt zur einen Richtung bewirken und folglich eine Bewegung der Vorrichtung um die vertikale Achse und die Erzeugung eines die Stellung der Vorrichtung um die vertikale Achse repräsentierenden Signals durch den zweiten Stellungsgeber (96) bewirkt.

6. Mechanismus nach Anspruch 5, dadurch gekennzeichnet, daß der erste und zweite Betätiger (43, 88) in jedem Fall ein Elektromotor ist und daß der erste und zweite Stellungsgeber (48, 96) in jedem Fall eine elektromechanische Vorrichtung ist.

## Revendications

1. Mécanisme (10) pour soutenir un dispositif (50) et assurer un mouvement réglable de celui-ci autour d'un axe de pivotement et autour d'un axe à peu près perpendiculaire à celui-ci, ledit mécanisme comprenant un étrier (16) ayant deux branches espacées latéralement (18, 20), et des roulements (36, 44) pour soutenir le dispositif (50) pour pivoter autour dudit axe de pivotement (41), caractérisé en ce que lesdites branches (18, 20) soutiennent deux bras oscillants (22, 24) pour un mouvement de pivotement autour de deux axes (30, 32) inclinés par rapport à l'axe de pivotement (41), lesdits roulements (36, 44) étant montés dans chacun desdite bras oscillants (22, 24), et en ce que ledit mécanisme comprend des moyens de liaison (60, 70, 88) reliant entre-eux lesdits bras oscillants (22, 24) l'un à l'autre pour assurer on mouvement synchrone desdits bras oscillants (22, 24) en sens opposés autour desdits axes inclinés (30, 32) afin de faire tourner le dispositif (50) et assurer un mouvement réglable de celui-ci autour de l'autre axe à peu près perpendiculaire audit axe de pivotement (41).

2. Mécanisme suivant la revendication 1, caractérisé en ce que les axes inclinés (30, 32) se coupent en un point (A) situé à peu près à mi-distance entre lesdites branches (18, 20) dudit étrier (16).

3. Mécanisme suivant la revendication 2, caractérisé en ce qu'il comprend deux organes de commande identiques (52, 54), l'un desdits organes de commande (52) étant relié rigidement à l'un desdits bras oscillants (22) et l'autre organe de commande (54) étant relié rigidement à l'autre desdits bras oscillants (24) et en ce que les moyens de liaison (60, 70) sont des câbles reliant entre-eux les organes de commande (52, 54) desdits bras oscillants (22, 24) l'un à l'autre pour assurer un déplacement synchrone desdits bras oscillants (22, 24) en sens opposés autour desdits axes inclinés (30, 32) de manière à faire tourner ledit dispositif (50) et à assurer un mouvement réglable de celui-ci autour de l'autre axe à peu près perpendiculaire à l'axe de pivotement (41).

4. Mécanisme suivant la revendication 3, caractérisé en ce que chacun desdits organes de commande (52, 54) est pourvu d'une paire d'oreilles (56, 58) espacées angulairement et lesdits cables (60, 70) relient l'une à l'autre les oreilles correspondantes (56, 58) desdits organes de commande (52, 54).

5. Mécanisme suivant la revendications 3 ou 4, dans lequel ledit axe de pivotement (41) est à peu près horizontal, et ledit autre axe est à peu près vertical, caractérisé en ce que ledit mécanisme (10) comprend un premier actionneur (42) et un premier capteur (48) de position portés par lesdits branches (18, 20) pour astreindre le dispositif (50) à pivoter autour dudit axe horizontal et engendrer un signal représentant la position du dispositif (50) autour dudit axe horizontal, et un second actionneur (88) et un second capteur de position (90) portés par ledit étrier (16), ledit second actionneur (88) étant relié à l'un desdits bras oscillants (22) pour provoquer un mouvement dudit premier desdits bras oscillants dans un sens autour de son axe incliné (30) de manière que lesdits câbles (60, 70) astreignent l'autre desdits bras oscillants (24) à se déplacer dans une direction opposée à ladite première direction ayant pour résultat que le dispositif se déplace autour dudit axe vertical, et ledit second capteur de position (96) engendrant un signal représentant la position du dispositif autour dudit axe vertical.

6. Mécanisme suivant la revendication 5, caractérisé en ce que lesdits premier et second actionneurs (42, 88) sont dans chaque un moteur électrique, et dans lequel lesdits premier et second capteurs de position (48, 96) sont dans chaque cas un dispositif électromécanique.

Fig. 1

Fig. 2

Fig. 3

Fig. 5

Fig. 4